# EUROPEAN PATENT APPLICATION

(11) **EP 4 586 176 A1**
(43) Date of publication of application: **16.07.2025**
(21) Application number: 23863156.8
(22) Date of filing: 04.09.2023
(51) Int. Cl.: G06Q 40/03

(54) **INFERENCE SYSTEM AND INFERENCE METHOD**

(30) Priority: 09.09.2022 JP 2022144050
(71) Applicant: Caulis Inc., Tokyo 100-0004 (JP)
(72) Inventor: SHIMAZU Atsuyoshi, Tokyo 100-0004 (JP)
(74) Representative: Algemeen Octrooi- en Merkenbureau B.V.
(86) International application number: PCT/JP2023/032284
(87) International publication number: WO 2024/053618

(57) **Abstract**

An estimation system that can estimate whether a client requested by an external device is trustworthy is provided.

The estimation system includes: an information processing device and a lifeline provider terminal. The information processing device includes: a first receiver that receives personal information and address information of a client from an external device; a first transmitter that transmits the personal information and address information of the client to the lifeline provider terminal; a second receiver that receives credit information from the lifeline provider terminal, including at least information capable of identifying whether the client is trustworthy, as determined on the basis of the personal information and address information of the client; and a second transmitter that transmits the credit information to the external device. The lifeline provider terminal includes: a third receiver that receives the personal information and address information of the client from the information processing device; a storage that stores lifeline provision information in which address information, presence/absence of a lifeline provided to an address indicated by the address information, and user information indicating a user that uses the address indicated by the address information are associated with each other; a specification unit that generates the credit information by identifying at least whether the client is trustworthy on the basis of the personal information and address information of the client received by the third receiver; and a third transmitter that transmits the credit information to the information processing device.

## Description

### BACKGROUND OF THE INVENTION

### 1. Field of the Invention

The present invention relates to an estimation system and method for estimating whether a client of an external device is trustworthy.

### 2. Description of Related Art

With the spread of the Internet and terminal devices such as smartphones, transactions at stores on the Internet (online stores) have increased rapidly recently. In such transactions over the Internet, goods are sometimes delivered to the delivery address specified by the purchaser, and an invoice is also sent to the delivery address.

However, fraud has been prevalent in such transactions at stores on the Internet where the purchaser uses a vacant house with no actual occupants as the delivery address and does not pay for the bill or other charges even though he or she has obtained the delivered goods.

This misuse of vacant addresses occurs not only in the purchase of goods at stores on the Internet but also in Internet auctions, opening bank accounts, applying for various loans and financing, and redeeming goods for points held, for example. Even when the delivery of goods is not present, fraud is also being committed by designating a vacant house as the address for financial institutions, credit cards, and other forms of identity authentication.

To avoid damage caused by such fraud, the technology disclosed in patent document 1 determines that the address specified as the delivery address of goods is fraudulent if the address of a real estate property listed in an advertisement matches the address specified as the delivery address. The technology described in patent document 1 compares the period of time in which the address is advertised and the period of time in which it is used as a delivery address, and determines that the address specified as a delivery address is fraudulent if those periods overlap.

In addition, patent document 2 discloses a technology that enables home delivery service providers, for example, to efficiently perform home delivery services by storing in a storage power usage information indicating the time series of power usage at a residence of a power service user and determining whether the user is at home on the basis of a comparison between the current power usage and the past power usage.

### Prior Art Documents

### Patent Documents

Patent Document 1: Japanese Laid-Open Patent Publication No. 2015-60255
Patent Document 2: Japanese Laid-Open Patent Publication No. 2016-126713

### SUMMARY OF THE INVENTION

### Problems to be Solved by the Invention

Since the technology disclosed in patent document 1 determines fraud on the basis of the address of the real estate property listed in the advertisement, real-time information on the real estate property listed in the advertisement is needed. However, advertising information (listing information) for real estate properties is usually not tied to rental or sales information in real time so that the listing fails to be controlled in real time. Normally, a time lag of one to two weeks occurs. Therefore, during this time lag period, the address of a vacant house could be misused by a fraudulent client.

In addition, the technology described in patent document 2 is not intended to determine whether the address being entered by the user corresponds to a vacant house. Even if the technology described in patent document 2 is applied to determine whether a house is vacant, it relies on comparing current and past power usage to assess whether the user is at home. As a result, if a house is actually vacant but its power usage remains similar to past patterns, the system may incorrectly determine that the user is at home (i.e., the house is not vacant). In addition, in some cases such as immediately after a move into the house, power usage may be low, and the house may be determined to be vacant (i.e., unoccupied) even though it is not vacant.

An object of the present invention, therefore, is to provide an estimation system and estimation method that provide information indicating whether a client is trustworthy on the basis of the entered address information and personal information. Means to Solve the Problems

An estimation system according to one embodiment of the present invention includes: an information processing device and a lifeline provider terminal. The information processing device includes: a first receiver that receives personal information and address information of a client from an external device; a first transmitter that transmits the personal information and address information of the client to the lifeline provider terminal; a second receiver that receives credit information from the lifeline provider terminal, including at least information capable of identifying whether the client is trustworthy, as determined on the basis of the personal information and address information of the client; and a second transmitter that transmits the credit information to the external device. The lifeline provider terminal includes: a third receiver that receives the personal information and address information of the client from the information processing device; a storage that stores lifeline provision information in which address information, presence/absence of a lifeline provided to an address indicated by the address information, and user information indicating a user that uses the address indicated by the address information are associated with each other; an identification unit that generates the credit information by identifying at least whether the client is trustworthy on the basis of the personal information and address information of the client received by the third receiver; and a third transmitter that transmits the credit information to the information processing device.

In the above estimation system, the identification unit may identify whether a lifeline is provided to the address indicated by the address information on the basis of the lifeline provision information, and identify whether the client is trustworthy on the basis of presence/absence of the provision of the lifeline.

In the above estimation system, the identification unit may set trustworthiness that indicates a degree to which the client is trustworthy, and set the trustworthiness relatively high if the lifeline has been provided.

In the above estimation system, the identification unit may identify, if the lifeline is provided to the address indicated by the address information, whether the client is trustworthy on the basis of whether the user information corresponding to the address shows a predetermined correlation with the personal information of the client.

In the above estimation system, the identification unit may set trustworthiness indicating a degree to which the client is trustworthy, and in a case where a lifeline has been provided to the address indicated by the address information, when the user information corresponding to the address shows a predetermined correlation with the personal information of the client, the identification unit may set the trustworthiness relatively high.

In the above estimation system, in a case where a lifeline has been provided to the address indicated by the address information, and the user information corresponding to the address shows a predetermined correlation with the personal information of the client, the identification unit may generate usage date and time information indicating when and for how long the client has been using the address indicated by the address information such that the date and time information is contained in the credit information.

In addition, an estimation method according to one embodiment of the invention includes: a first receiving step of receiving personal information and address information of a client from an external device by an information processing device; a first transmitting step of transmitting the personal information and address information of the client to a lifeline provider terminal by the information processing device; a second receiving step of receiving the personal information and address information of the client from the information processing device by the lifeline provider terminal; an identifying step of, by the lifeline provider terminal, generating credit information that includes information capable of identifying at least whether the client is trustworthy by referring to lifeline provision information that correlates address information, presence/absence of lifeline provision to an address indicated by the address information, and user information that indicates a user that uses the address indicated by the address information, and identifying at least whether the client is trustworthy on the basis of the personal information and address information of the client received in the second receiving step; a second transmitting step of transmitting the credit information to the information processing device by the lifeline provider terminal; a third receiving step of receiving the credit information from the lifeline provider terminal; and a third transmitting step of transmitting the credit information to the external device.

### Advantageous Effects of the Invention

The estimation system and estimation method of the present disclosure allow the estimation of whether a client requested by an external device is trustworthy, for example, to prevent the registration of a suspicious client as a customer.

### BRIEF DESCRIPTION OF THE DRAWINGS

Features, advantages, and technical and industrial significance of exemplary aspects of the invention will be described below with reference to the accompanying drawings, in which like numerals denote like elements, and wherein:
FIG. 1 shows a system diagram illustrating an example of a configuration of an estimation system,
FIG. 2 shows a block diagram illustrating an example of a configuration of an information processing device,
FIG. 3 shows a block diagram illustrating an example of a configuration of a lifeline provider terminal,
FIG. 4 shows a conceptual diagram of data illustrating an example of a structure of lifeline provision information,
FIG. 5 shows a sequence diagram illustrating an example of exchanges among devices in the estimation system,
FIG. 6 shows a flowchart illustrating an example of an operation of the information processing device to achieve the exchanges shown in FIG. 5, and
FIG. 7 shows a flowchart illustrating an example of an operation of the lifeline provider terminal to achieve the exchanges shown in FIG. 5.

### DETAILED DESCRIPTION OF ASPECTS

An estimation system and an estimation method according to the present invention will be described in detail with reference to the drawings.

### Embodiments

### Summary

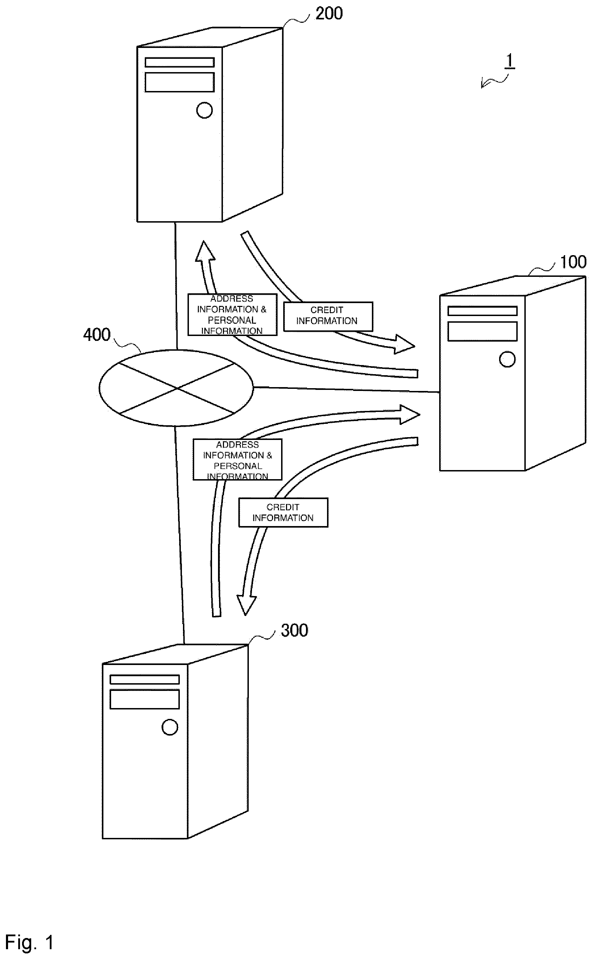

FIG. 1 shows an example of a system diagram illustrating a device for an estimation system 1 according to the present embodiment. As shown in FIG. 1, the estimation system 1 includes an information processing device 100 and lifeline provider terminals 200 (200a, 200b), which are communicatively connected via a network 400. An external device 300 is connected to the network 400 and configured to be accessible to the information processing device 100.

In the estimation system 1, the information processing device 100 accepts address information and personal information of a client (or client candidate) from the external device 300 via the network 400 to estimate whether the client is trustworthy. Specifically, the information processing device 100 transmits the accepted address information and personal information to the lifeline provider terminal 200, and the lifeline provider terminal 200 estimates whether the client is trustworthy based on whether the lifeline is provided to the address indicated by the address information and whether the personal information corresponding to the address information correlates beyond a certain level. That is, the estimation system 1 can be said to correspond to a trust estimation system that estimates whether the client of the external device 300 is trustworthy.

The lifeline provider terminal 200 transmits credit information including information that can identify whether the client is trustworthy to the information processing device 100 via the network 400. The information processing device 100 then transmits the credit information to the external device 300 via the network 400. This allows the user of the external device 300 to determine, for example, whether his/her client can be registered as a customer for a service offered by the external device 300, or to enter into some type of contract based on whether his/her client is trustworthy.

The network 400 includes wireless and wired networks. Specifically, for example, network 400 can be a wireless LAN (WLAN), wide area network (WAN), integrated service digital networks (ISDNs), wireless LANs, code division multiple access (CDMA), long term evolution (LTE), LTE-Advanced, fourth generation (4G), fifth generation (5G), and sixth generation (6G) and later mobile communication systems. The network 400 is not limited to these examples and can be, for example, a public switched telephone network (PSTN), Bluetooth (registered trademark), optical line, asymmetric digital subscriber line (ADSL), and satellite communication network. The network 400 may also be a combination of these.

A detailed description thereof will be given.

### Configuration

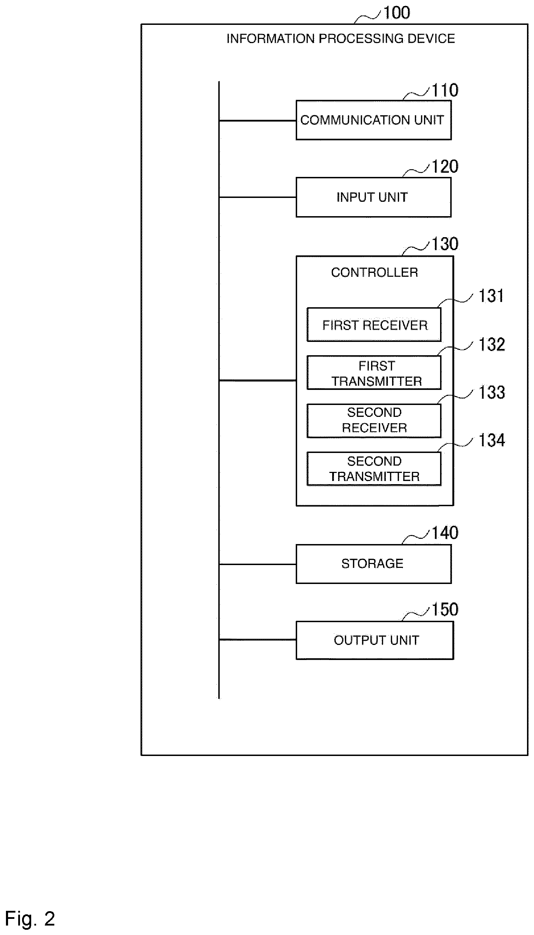

FIG. 2 shows a block diagram illustrating an example of a configuration of the information processing device 100. The information processing device 100 is directed to a computer system with a processor and memory, and may be embodied by a server device, PC, and tablet terminal, for example. The information processing device 100 accepts requests from the external device 300 and provides credit information to the external device 300 indicating whether the client of the external device 300 is trustworthy.

As shown in FIG. 2, the information processing device 100 includes a communication unit 110, an input unit 120, a controller 130, a storage 140, and an output unit 150.

The communication unit 110 is directed to a communication interface for performing communication with external devices via the network 400 according to instructions from the controller 130. The communication unit 110, for example, receives address information and personal information from the external device 300 and communicates them to the controller 130. The communication unit 110, for example, transmits the address information and personal information to the lifeline provider terminal 200 in accordance with the instructions from the controller 130 to request a determination of whether the corresponding client is trustworthy. Here, the address information is directed to information indicating the residence where the client (or client candidate) of the external device 300 resides in the external device 300, and the personal information is directed to personal information other than the address of the client. The personal information other than the address may include any information that indicates the characteristics of the client, such as at least one or more of the followings: the name, date of birth or age, gender, and telephone number of the client. The personal information may also include information other than these, such as a facial image, hair color, eye color, and country of origin of the client. The communication unit 110 receives from the lifeline provider terminal 200, via the network 400, credit information including information capable of identifying whether the client of the external device 300 is trustworthy, and communicates this information to the controller 130. The communication unit 110 transmits the credit information to the external device 300 via the network 400 in accordance with the instructions from the controller 130.

The input unit 120 is directed to an input interface that accepts inputs from the operator of the information processing device 100 and other users. The input unit 120 may be embodied by input devices such as a keyboard and mouse, for example, or by a microphone that accepts voice input. The input unit 120 communicates the contents entered by the operator to the controller 130. The input unit 120 may, for example, accept input of the address information and/or personal information of the client of the external device 300, which may be communicated orally by the operator of the external device 300, and communicate it to the controller 130.

The controller 130 is directed to a processor that serves to control the portions of the information processing device 100. The controller 130 executes various programs stored in the storage 140 and references data stored in the storage 140 to embody the functions to be performed as the information processing device 100.

The controller 130 functions as the first receiver 131, first transmitter 132, second receiver 133, and second transmitter 134.

The first receiver 131 receives the address information of the client of the external device 300 and personal information other than the address of the client transmitted from the external device 300 via the communication unit 110. The first receiver 131 communicates the received address information and personal information to the first transmitter 132.

Upon receiving the address information and personal information communicated by the first receiver 131, the first transmitter 132 requests the lifeline provider terminal 200 to determine whether the client of the external device 300 is trustworthy. That is, the first transmitter 132 transmits the communicated address information and personal information to the lifeline provider terminal 200 via the communication unit 110.

The second receiver 133 receives, via the communication unit 110, credit information transmitted from the lifeline provider terminal 200, which indicates whether the client of the external device 300 is trustworthy. Upon receiving the credit information, the second receiver 133 communicates the credit information to the second transmitter 134.

Upon receiving the credit information from the second receiver 133, the second transmitter 134 transmits the credit information to the external device 300 via the communication unit 110. At this time, the controller 130 may add some processing to the credit information received from the lifeline provider terminal 200 and transmit it to the external device 300. The processing here may be directed to, for example, converting, upon receiving the information from the lifeline provider terminal 200 as credit information indicating the presence/abcense of the provision of the lifeline, the information into information indicating whether the client of the external device 300 is trustworthy.

The storage 140 is directed to a storage medium that stores various programs and data needed by the information processing device 100 to operate. The storage 140 can be embodied by, for example, but not limited to, a hard disc drive (HDD), solid state drive (SSD), and flash memory.

The output unit 150 outputs the specified information in accordance with the instructions from the controller 130. The output of the information by the output unit 150 may be in the form of images or text, audio, or the transmission of the information by an external device. The output unit 150 may be embodied, as an example, by a monitor or speaker connected to the information processing device 100, and the transmission of the information is embodied via the communication unit 110. The output unit 150 may, for example, display the credit information provided by the lifeline provider terminal 200 on a monitor.

The information processing device 100 is as described above.

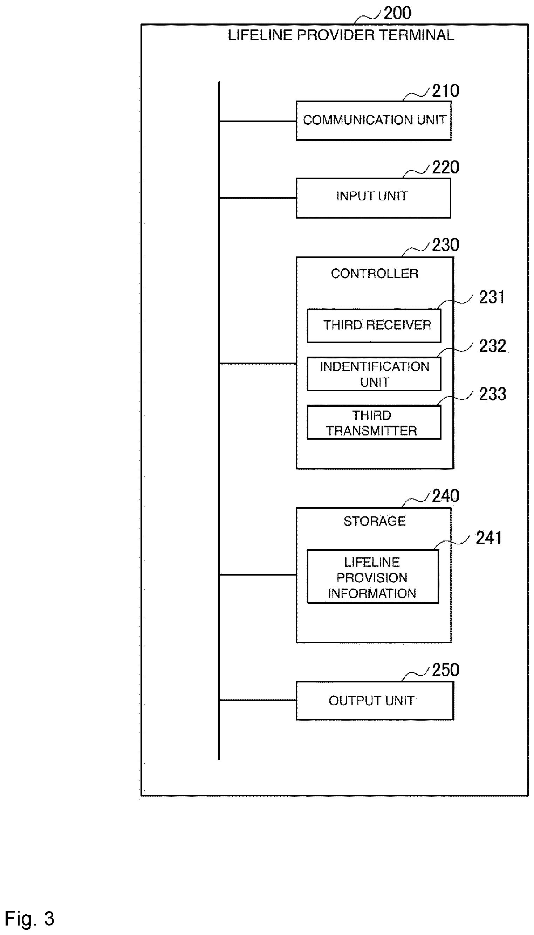

FIG. 3 shows a block diagram illustrating an example of a configuration of the lifeline provider terminal 200. The lifeline provider terminal 200 is directed to an information processing terminal of a lifeline provider that provides a certain lifeline to various facilities or people, which corresponds to a computer system with a processor and memory. The lifeline provider terminal 200 may be embodied by, for example, but not limited to, a server device, PC, tablet terminal, smartphone, or cell phone. Here, the lifeline may correspond to those people need in their daily lives, such as electricity, gas, and water, and may include telecommunications. That is, lifeline providers may include, for example, electric power companies, gas companies, water companies, and telecommunication companies.

As shown in FIG. 3, the lifeline provider terminal 200 includes a communication unit 210, an input unit 220, a controller 230, a storage 240, and an output unit 250.

The communication unit 210 is directed to a communication interface for performing communication with external devices via the network 400 in accordance with the instructions from the controller 230. The communication unit 210 receives, for example, address information and personal information of the client of the external device 300 from the information processing device 100 and communicates them to the controller 230. The communication unit 210 also transmits credit information indicating whether the client of the external device 300 is trustworthy, for example, in accordance with the instructions from the controller 230.

The input unit 220 is directed to an input interface that accepts input from the user of the lifeline provider terminal 200. The input unit 220 may be embodied by input devices such as a keyboard and mouse, for example, or by a microphone that accepts voice input. The input unit 220 communicates the contents entered by the user to the controller 230. The input unit 220 may accept and communicate to the controller 230, for example, the input of address information and personal information of the client of the external device 300, which may be communicated orally by the operator of the information processing device 100.

The controller 230 is directed to a processor that serves to control various portions of the lifeline provider terminal 200. The controller 230 executes various programs stored in the storage 240 and references data stored in the storage 240 to embody the functions to be performed as the lifeline provider terminal 200. The controller 230 determines whether the client of the external device 300 is trustworthy on the basis of the received address information and personal information.

The controller 230 has a third receiver 231, a third identification unit 232, and a third transmitter 233 as functions to be performed by the lifeline provider terminal 200.

The third receiver 231 receives, via the communication unit 210, address information and personal information transmitted from the information processing device 100. The third receiver 231 communicates the received address information and personal information to the identification unit 232.

Upon receiving the address information and personal information from the third receiver 231, the identification unit 232 identifies whether the client of the external device 300 associated with the address information and personal information is trustworthy. The identification unit 232 may compute a numerical value for the trustworthiness of the client, indicating whether the client is trustworthy on the basis of the communicated address information and personal information to determine whether the client is trustworthy on the basis of the trustworthiness.

The identification unit 232 identifies whether a lifeline is provided to the address corresponding to the communicated address information by referring to the lifeline provision information 241 stored in the storage 240. The identification unit 232 computes the trustworthiness so that the trustworthiness is relatively high when a lifeline is provided to the address indicated by the communicated address information, and relatively low when a lifeline is not provided.

The identification unit 232 computes the trustworthiness in accordance with the degree of correlation between the communicated personal information and the personal information that is associated with the address corresponding to the address information on the lifeline provision information 241. The identification unit 232 computes the trustworthiness in accordance with the degree of match between the communicated personal information and the personal information on the lifeline provision information 241. That is, the identification unit 232 computes the trustworthiness so that the higher the degree of match, relatively the higher the trustworthiness, and the lower the degree of match, relatively the lower the trustworthiness.

The identification unit 232 identifies the client associated with the communicated address information and personal information as trustworthy if the computed trustworthiness is greater than or equal to a predetermined threshold value, and identifies the client as untrustworthy if the trustworthiness is below the predetermined threshold value. As an example of other forms of the identification, in the case where the number of pieces of the personal information is defined, the client can be identified as trustworthy if the number of matched pieces of the personal information is greater than or equal to a predetermined threshold value.

The identification unit 232 generates credit information indicating whether the client is trustworthy and communicates it to the third transmitter 233. Here, the credit information includes, at least, information capable of identifying whether the client is trustworthy. The information capable of identifying whether a client is trustworthy may simply be directed to binary information indicating whether the client is trustworthy, or numerical information of the trustworthiness computed by the identification unit 232. Alternatively, the credit information may further include information within the scope that can be provided by the lifeline provider terminal 200, such as information indicating whether the client has lived at the communicated address, information indicating, if the client is (or was) living there, when they started and finished living there, or information indicating, if the client is not living, whether any evidence that the client has lived there is present.

Upon receiving the credit information from the identification unit 232, the third transmitter 233 transmits it to the information processing device 100 via the communication unit 210.

The storage 240 is directed to a storage medium that stores various programs and data needed by the lifeline provider terminal 200 to operate. The storage 240 can be embodied by, for example, but not limited to, a hard disc drive (HDD), solid state drive (SSD), and flash memory. The storage 240 stores, for example, a program that, upon receiving the address information and personal information from the information processing device 100, identifies whether the client of the external device 300 associated with the address information and personal information is trustworthy and generates credit information. The storage 240 also stores lifeline provision information 241, which indicates, for example, the address, presence/absence of a lifeline provided to that address, and the personal information to be provided.

The output unit 250 outputs the specified information in accordance with the instructions from the controller 230. The output of information by the output unit 250 may be in the form of images or text, audio, or the transmission of information by an external device. The output unit 250 may be embodied, as an example, by a monitor or speaker provided in the lifeline provider terminal 200, and the transmission of information is embodied via the communication unit 210.

The lifeline provider terminal 200 is as described above.

The external device 300 may be directed to any general PC or other information processing device, and may be directed to any computer system that serves to transmit address information and personal information and receive and output credit information. Therefore, a detailed description of the configuration of the external device 300 is omitted.

### Data

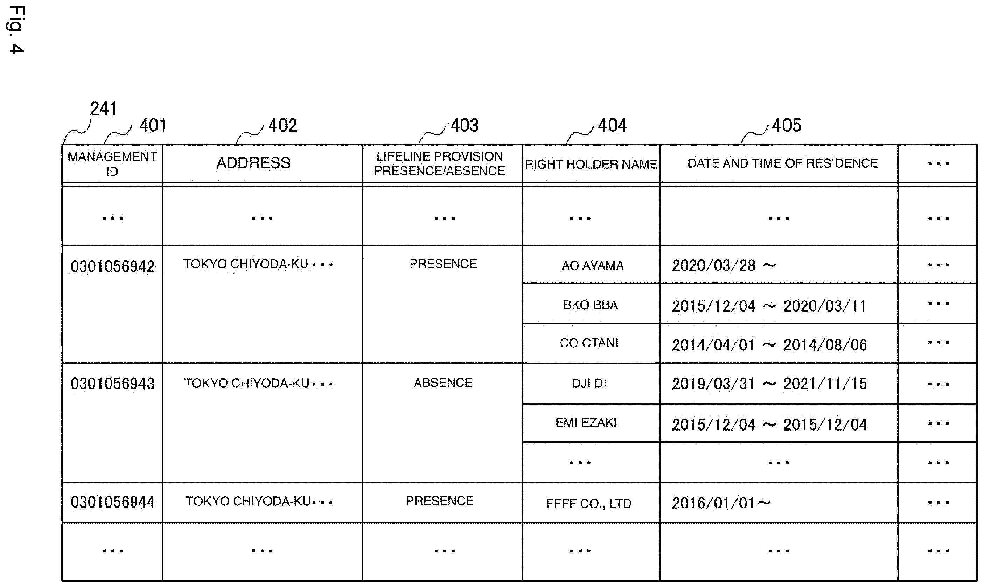

FIG. 4 shows a conceptual diagram of data illustrating an example of a structure of the lifeline provision information 241. The lifeline provision information 241 is directed to information that indicates to which address the lifeline provider associated with the lifeline provider terminal 200 is providing the lifeline and the information (personal information) of the subject being provided.

As shown in FIG. 4, the lifeline provision information 241 is directed to information where the management ID 401, address 402, lifeline provision presence/absence 403, right holder name 404, and date and time of residence 405 are associated with each other.

The management ID 401 is directed to identification information assigned by the information processing device 100 for convenience of managing presence/absence of a lifeline provided to each address.

The address 402 is directed to information that indicates the address where the provision of the lifeline is managed with the corresponding management ID 401.

The lifeline provision presence/absence 403 is directed to information indicating whether a lifeline is currently provided to the corresponding address 402. In the example in FIG. 4, "PRESENCE" is used when a lifeline is provided and "ABSENCE" is used when no lifeline is provided, which may be expressed as "0" or "1".

The right holder name 404 is directed to information indicating the name of the user that used (resided at) the corresponding address 402. The right holder may be an individual or an organization such as a corporation or company. The right holder name 404 may include information on past right holders as well as current right holders.

The date and time of residence 405 is directed to information indicating the date and time of residence of the corresponding right holder name 404 at the corresponding address 402. As shown in FIG. 4, although the end date of the residence date and time is not registered for currently residing right holders, the current date and time may be registered in a manner where the date and time of residence 405 is automatically updated.

The lifeline provider terminal 200 is as described above. The lifeline provision information 241 allows the lifeline provider terminal 200 to determine whether a lifeline is being provided to the inquired address, and also determine whether the corresponding client is trustworthy from the correspondence of the registered personal information.

The example of the structure of the lifeline provision information 241 shown in FIG. 4 is only an example. The lifeline provision information 241 may also include information other than those shown in FIG. 4 (e.g., gender, phone number, and email address as personal information), which may also be referenced as an indicator for determining whether a client is trustworthy. In contrast, unnecessary information of the information shown in FIG. 4 may be deleted. For example, in the lifeline provision information 241, the management ID 401 is not required, and the lifeline provision presence/absence 403 does not need to be identifiable from the date and time of residence 405.

### Operation

The operation of the estimation system 1 and associated devices will now be described.

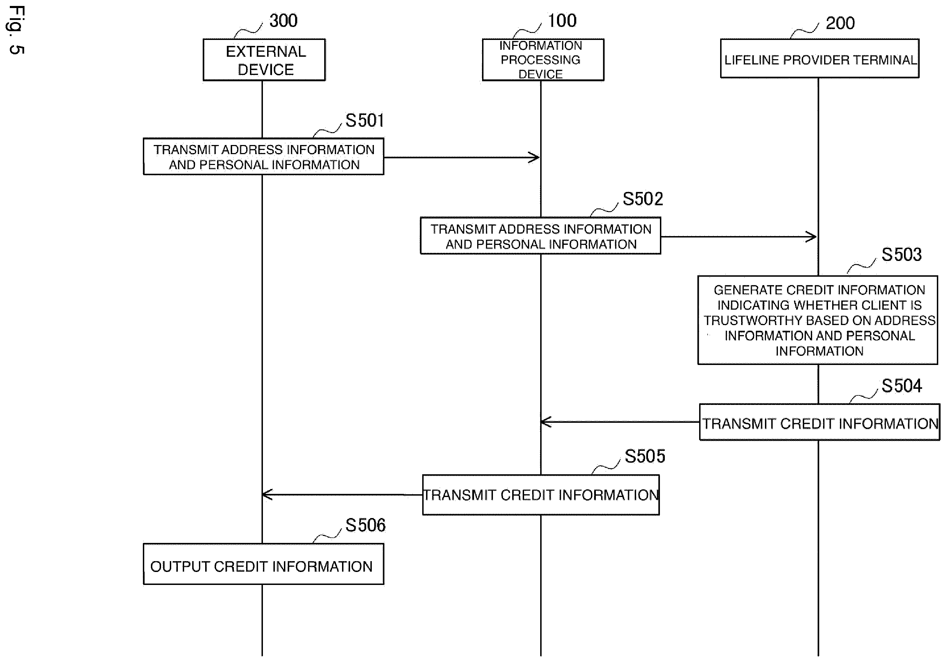

FIG. 5 shows a sequence diagram illustrating an example of exchanges among devices in the estimation system 1. As shown in FIG. 5, the external device 300 transmits the address information and the personal information other than the address information of the client (or client candidate) of the external device 300 to the information processing device 100 (step S501). That is, the address information and personal information transmitted here correspond to address information and personal information related to the client that the external device 300 wishes to determine whether the client is trustworthy, as well as information provided by the client to the external device 300.

Upon receiving the address information and personal information from the external device 300, the information processing device 100 transmits the received address information and personal information to the lifeline provider terminal 200 (step S502) to inquire whether the client of the external device 300 is trustworthy.

Upon receiving the address information and personal information from the information processing device 100, the lifeline provider terminal 200 identifies whether the lifeline is provided to the address indicated by the address information, and, on the basis of the personal information, identifies whether it is related to the address information to generate credit information that includes information capable of identifying whether the client of the external device 300 is trustworthy (step S503). The lifeline provider terminal 200 then transmits the generated credit information to the information processing device 100 (step S504).

Upon receiving the credit information from the lifeline provider terminal 200, the information processing device 100 relays it to the external device 300. That is, the information processing device 100 transmits the received credit information to the external device 300 (step S505).

Upon receiving the credit information, the external device 300 displays the received credit information (step S506). This allows the operator of the external device 300 to determine whether the client is trustworthy.

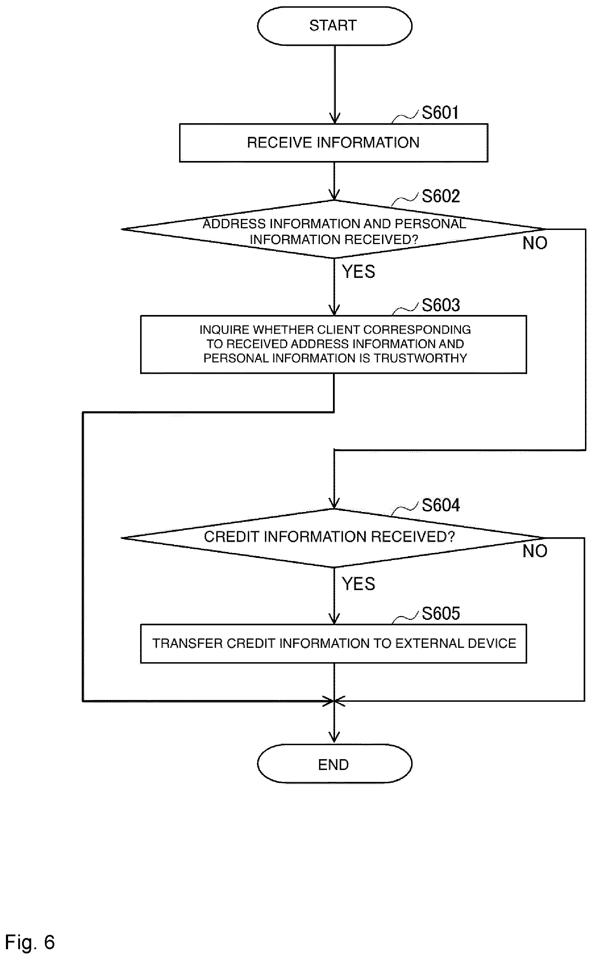

FIG. 6 shows a flowchart illustrating an example of an operation of the information processing device 100 to achieve the exchanges shown in FIG. 5.

As shown in FIG. 6, the communication unit 110 of the information processing device 100 receives information via the network 400 (step S601). The communication unit 110 communicates the received information to the controller 130.

The controller 130 determines whether the received information corresponds to address information and personal information (step S602). If the received information corresponds to address information and personal information (YES in step S602), the first receiver 131 receives them and communicates them to the first transmitter 132. If the received information does not correspond to address information and personal information (NO in step S602), the process moves to step S604.

Upon receiving the address information and personal information from the first receiver 131, the first transmitter 132 transmits the address information and personal information to the lifeline provider terminal 200 via the communication unit 110, requests a determination of whether the client of the external device 300 is trustworthy (step S603), and terminates the process.

The controller 130 determines whether the received information corresponds to credit information (step S604). If the received information does not correspond to credit information (NO in step S604), the process is executed in accordance with the contents of the received information. If the received information corresponds to credit information (YES in step S604), the second receiver 133 receives it and communicates it to the second transmitter 134.

Upon receiving the credit information from the second receiver 133, the second transmitter 134 transmits the credit information to the external device 300 via the communication unit 110 (step S605) and terminates the process.

The operation of the information processing device 100 is as described above.

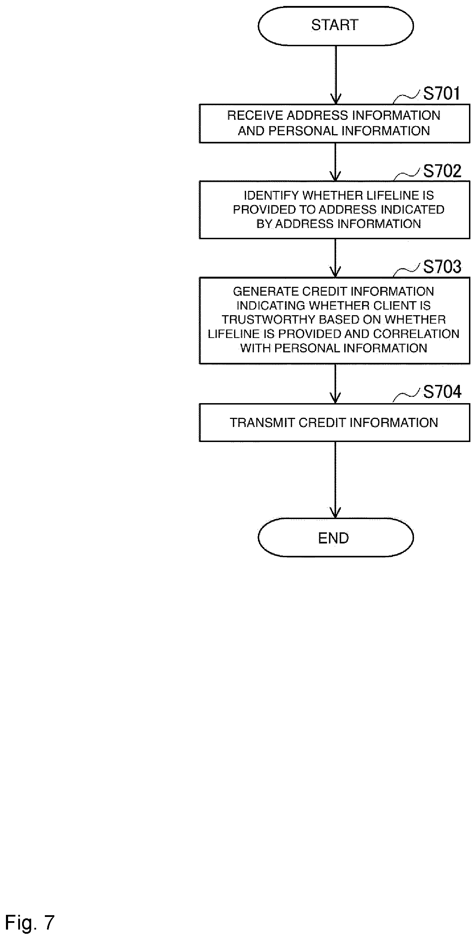

FIG. 7 shows a flowchart illustrating an example of an operation of the lifeline provider terminal 200 to achieve the exchanges shown in FIG. 5.

As shown in FIG. 7, the communication unit 210 of the lifeline provider terminal 200 receives address information and personal information transmitted from the information processing device 100. The communication unit 210 communicates the received address information and personal information to the controller 230.

The third receiver 231 of the controller 230 receives the communicated address information and personal information (step S701). The third receiver 231 communicates the received address information and personal information to the identification unit 232.

Upon receiving the address information and personal information from the third receiver 231, the identification unit 232 identifies whether a lifeline is provided to the address corresponding to the received address information (step S702).

On the basis of the received personal information, the identification unit 232 identifies whether the client of the external device 300 corresponding to the received address information and personal information is trustworthy. The identification unit 232 then generates credit information indicating whether the client is trustworthy (step S703). As an example, the identification unit 232 computes the trustworthiness of the client of the external device 300 on the basis of whether a lifeline is provided to the received address information, as well as the correlation between the personal information provided by the client and the personal information registered in the lifeline provision information. The identification unit 232 generates credit information indicating that the client of the external device 300 is trustworthy if the computed trustworthiness is greater than or equal to a predetermined threshold value, and generates credit information indicating that the client of the external device 300 is not trustworthy if the computed trustworthiness is below a predetermined threshold value.

Upon receiving the credit information from the specification unit 232, the third transmitter 233 transmits the credit information to the information processing device 100 via the communication unit 210 (step S704) and terminates the process.

The example of the operation of the lifeline provider terminal 200 is as described above.

Since the external device 300 only transmits the address information and personal information to the information processing device 100, and receives and displays the credit information from the information processing device 100, a detailed description of its operation is omitted.

### Usage Form of the Estimation System 1

The following describes in what way the estimation system 1 above identifies the client of the external device 300. The external device 300 may be directed to any information processing device associated with a company, corporation, and individual, for example, that is in the business of providing some service to clients, and may include any process for registering or confirming the client information.

First, as one example, the external device 300 may be directed to a server device for an e-commerce, i.e., e-commerce site. In this case, a user that wishes to use the e-commerce site corresponds to a client of the external device 300, and the estimation system 1 may be used to determine whether the user is allowed to be registered when the user is registered to let him/her use the service. Even if a user is registered, the address information and the name of the recipient of the goods purchased by the user may be transmitted to the estimation system 1 to determine whether the address of the recipient is trustworthy. This will discourage fraudulent activities such as designating an address of a vacant house to receive goods on an e-commerce site.

As another example, the external device 300 may correspond to a server device of an insurance company, for example. In this case, the client of the external device 300 may correspond to a user that is trying to purchase insurance from the insurance company. The external device 300 may transmit the address information and personal information of the user to the estimation system 1 at the time of contracting, and use the estimation system 1 to determine whether the user may contract as a client. This can, for example, curb the use of the system by insurance fraud.

As another example, the external device 300 may correspond to a server device of a financial institution such as a bank, for example. In this case, the client of the external device 300 may be a user that wishes to open an account with the bank. The external device 300 may transmit the address information and personal information of the user to the estimation system 1 at the time of opening the account, and use the estimation system 1 to determine whether the account of the user may be opened. This may discourage the opening of fictitious accounts. In addition, banks and other financial institutions require continuous customer management, and the estimation system 1 can be used to determine whether the information of the registered user can be trusted as up-to-date. This allows, for example, if the estimation system 1 determines that address information of a client cannot be trusted, the information of the client to be kept up to date by contacting the client from the external device 300 to confirm the current address and other information.

Accordingly, in the estimation system 1, on the basis of requests from various forms of the external device 300, the trustworthiness of the client is determined, and on the basis of the determination results, the external device 300 can be prompted to improve the quality of the services it provides.

### Summary

The estimation system 1 according to the present embodiment is capable of providing information that can identify whether the requested client is trustworthy. It can be presumed that a client that designates a vacant house as an address is committing or is likely to commit some kind of fraud. Accordingly, if a lifeline is provided to the address information of the client, the client can be identified as more trustworthy than a client that designates a vacant house as his or her address since the use of the address itself is established. Whether the client of the external device 300 is trustworthy can be identified more precisely if the personal information presented by the client of the external device 300 correlates (matches) with the personal information in the customer information (lifeline provision information 241) retained by the lifeline provider for the address indicated by the address information greater than or equal to a predetermined level.

### Supplementary Description

The estimation system 1 and the information processing device 100 according to the embodiments above are not limited to those shown in the embodiments above. Various variations will be described below.
(1) In the above embodiment, the information processing device 100 receives credit information indicating whether the client of the external device 300 is trustworthy from the lifeline provider terminal 200, and transmits it to the external device 300. Here, the embodiment above describes an example in which the credit information includes information on whether the client of the external device 300 is trustworthy as determined at the lifeline provider terminal 200, but the form of the credit information is not limited to this. Any form of information that can identify whether the client of the external device 300 of the credit information is trustworthy is acceptable.

For example, the lifeline provider terminal 200 may be configured to transmit information to the information processing device 100, indicating, as credit information, whether a lifeline is provided to the address indicated by the address information received by the lifeline provider terminal 200 from the information processing device 100. Upon receiving this, the information processing device 100 may be configured to transmit credit information to the external device 300 as is, indicating whether the lifeline is provided, or transmit credit information processed into information indicating whether the lifeline is provided.

For example, the lifeline provider terminal 200 may be configured to transmit information to the information processing device 100, indicating, as credit information, whether each piece of the personal information received by the lifeline provider terminal 200 from the information processing device 100 matches the personal information of the lifeline recipient associated with the address indicated by the address information. Upon receiving this, the information processing device 100 may be configured to transmit, to the external device 300, as credit information, information indicating whether each piece of the personal information matches as is. Alternatively, the information processing device 100 may determine whether the client of the external device 300 is trustworthy on the basis of the degree of match (correlation) of each piece of the personal information, and transmit the determination result to the external device 300 as credit information.

For example, the lifeline provider terminal 200 may be configured to transmit, to the information processing device 100, information indicating from when the lifeline has been provided to the client indicated by the personal information, as credit information, in cases where the lifeline is being provided to the address indicated by the address information received by the lifeline provider terminal 200 from the information processing device 100. The information processing device 100 may be configured to receive this information and transmit it to the external device 300.

For example, the lifeline provider terminal 200 may be configured to transmit, to the information processing device 100, as credit information, information indicating the period during which lifeline was provided to the address indicated by the address information received by the lifeline provider terminal 200 from the information processing device 100, in cases where lifeline is not currently provided to that address but evidence is recognized where the client indicated by the personal information previously resided at the address and received the lifeline. At this time, if no evidence of a past lifeline provision is recognized, credit information indicating the no evidence may be transmitted. The lifeline provider terminal 200 may also be configured to transmit credit information indicating a fact that the lifeline is being provided to a person different from the client indicated by the personal information even though the lifeline is being provided. The information processing device 100 may be configured to receive this information and transmit it to the external device 300.

(2) In the above embodiment, the information processing device 100 may be configured to retain the functions retained by the lifeline provider terminal 200. For example, if the information processing device 100 has access to the lifeline provision information retained by the lifeline provider terminal 200, the information processing device 100 may identify whether the client of the external device 300 is trustworthy. Alternatively, as shown in the supplementary description (1) above, the information processing device 100 may have a function (equivalent to the function of the identification unit shown in the embodiments above) of receiving information of the presence/absence of the provision of a lifeline and the match/mismatch of the pieces of the personal information from the lifeline provider terminal 200 to determine whether the client of the external device 300 is trustworthy.

(3) When each functional unit of the information processing device 100 or the lifeline provider terminal 200 is embodied by software, the information processing device 100 or the lifeline provider terminal 200 includes a CPU that executes the instructions of the program as software that embodies each function, a read only memory (ROM) or storage (referred to as "recording media") in which the program above and various information are readably recorded by a computer (or CPU), and a random access memory (RAM) that develops the program above, for example. The object of the present invention is achieved by a computer (or CPU) reading and executing the above programs from the above recording media. That is, the information processing device 100 and lifeline provider terminal 200 according to the present invention function as each of the above components by the CPU executing a program loaded on RAM. As the recording media above, "non-transient tangible media" such as semiconductor memory, and programmable logic circuits may be used. The program above may be supplied to the computer above via any transmission medium (e.g., communication network, and broadcast wave) capable of transmitting the program. The invention can also be embodied in the form of an information signal embedded in a carrier wave, in which the program above is embodied by electronic transmission.

The program above can be implemented using, for example, scripting languages such as ActionScript and JavaScript (registered trademark), Python, and Ruby, object-oriented programming languages such as C, C++, C#, Objective-C, Swift, and Java (registered trademark), and markup languages such as HTML5. Further, the reference to "unit (section, module, unit)" in the claims may be read as "means" or "circuit". For example, the communication unit can be read as a communication means or a communication circuit.

The program of this disclosure may be provided to the information processing device 100 via any transmission medium (e.g., communication network, and broadcast wave) capable of transmitting the program.

(4) The order and timing of each of the processes shown in the above embodiments can be changed as needed if the same effects as those shown in the above embodiments can be achieved. For example, in the flowchart shown in FIG. 6 of the above embodiments, the processing of steps S602 and S603 and the processing of steps S604 and S605 may be reversed, i.e., steps S604 and S605 may be executed first, or steps S602 and S603 and steps S604 and S605 may be executed in parallel.

### Description of Reference Numerals

100: Information Processing Device
110: Communication Unit
120: Input Unit
130: Controller
131: First Receiver
132: First Transmitter
133: Second Receiver
134: Second Transmitter
140: Storage
150: Output Unit
200: Terminal Device
210: Communication Unit
220: Input Unit
230: Controller
231: Third Receiver
232: Identification Unit
233: Third Transmitter
240: Storage
241: Lifeline Provision Information
250: Output Unit
300: External Device
400: Network

## Claims

1. An estimation system comprising: an information processing device and a lifeline provider terminal,
the information processing device including:
a first receiver that receives personal information and address information of a client from an external device;
a first transmitter that transmits the personal information and address information of the client to the lifeline provider terminal;
a second receiver that receives credit information from the lifeline provider terminal, including at least information capable of identifying whether the client is trustworthy, as determined on the basis of the personal information and address information of the client; and
a second transmitter that transmits the credit information to the external device,
the lifeline provider terminal including:
a third receiver that receives the personal information and address information of the client from the information processing device;
a storage that stores lifeline provision information in which address information, presence/absence of a lifeline provided to an address indicated by the address information, and user information indicating a user that uses the address indicated by the address information are associated with each other;
an identification unit that generates the credit information by identifying at least whether the client is trustworthy on the basis of the personal information and address information of the client received by the third receiver; and
a third transmitter that transmits the credit information to the information processing device, wherein
the identification unit identifies whether a lifeline is provided to the address indicated by the address information on the basis of the lifeline provision information, and identifies whether the client is trustworthy on the basis of presence/absence of the provision of the lifeline, and
the identification unit identifies, if the lifeline is provided to the address indicated by the address information, whether the client is trustworthy on the basis of whether the user information corresponding to the address shows a predetermined correlation with the personal information of the client.

2. The estimation system according to claim 1, wherein the identification unit sets trustworthiness that indicates a degree to which the client is trustworthy, and sets the trustworthiness relatively high if the lifeline has been provided.

3. The estimation system according to claim 1, wherein the identification unit sets trustworthiness indicating a degree to which the client is trustworthy, and in a case where a lifeline has been provided to the address indicated by the address information, when the user information corresponding to the address shows a predetermined correlation with the personal information of the client, the identification unit sets the trustworthiness relatively high.

4. The estimation system according to claim 1, wherein in a case where a lifeline has been provided to the address indicated by the address information, and the user information corresponding to the address shows a predetermined correlation with the personal information of the client, the identification unit generates usage date and time information indicating when and for how long the client has been using the address indicated by the address information such that the date and time information is contained in the credit information.

5. The estimation system according to claim 1, wherein the second transmitter transmits to the external device credit information indicating whether the lifeline is being provided, which credit information is obtained by processing the credit information received by the second receiver.

6. The estimation system according to any one of claims 1 to 5, wherein
the user information is at least one of the following: name, date of birth, age, gender, phone number, facial image, hair color, eye color, or country of origin, and
the personal information of the client is at least one of the following: name, date of birth, age, gender, telephone number, facial image, hair color, eye color, or country of origin corresponding to the user information.

7. An estimation method comprising the steps of:
a first receiving step of receiving personal information and address information of a client from an external device by an information processing device;
a first transmitting step of transmitting the personal information and address information of the client to a lifeline provider terminal by the information processing device;
a second receiving step of receiving the personal information and address information of the client from the information processing device by the lifeline provider terminal;
an identifying step of, by the lifeline provider terminal, generating credit information that includes information capable of identifying at least whether the client is trustworthy by referring to lifeline provision information that correlates address information, presence/absence of lifeline provision to an address indicated by the address information, and user information that indicates a user that uses the address indicated by the address information, and identifying at least whether the client is trustworthy on the basis of the personal information and address information of the client received in the second receiving step;
a second transmitting step of transmitting the credit information to the information processing device by the lifeline provider terminal;
a third receiving step of receiving the credit information from the lifeline provider terminal; and
a third transmitting step of transmitting the credit information to the external device, wherein
the identifying step identifies whether a lifeline is provided to the address indicated by the address information on the basis of the lifeline provision information, and identifies whether the client is trustworthy on the basis of presence/absence of the provision of the lifeline, and
the identifying step identifies, if the lifeline is provided to the address indicated by the address information, whether the client is trustworthy on the basis of whether the user information corresponding to the address shows a predetermined correlation with the personal information of the client.
